# EUROPEAN PATENT SPECIFICATION

(11) **EP 1 253 357 B1**
(45) Date of publication and mention of the grant of the patent: **21.12.2005**
(21) Application number: 02006525.6
(22) Date of filing: 19.03.2002
(51) Int. Cl.: F16J 3/04, B60R 22/195

(54) **Boot and seat belt device employing the same**
Faltenbalg und Sicherheitsgurtvorrichtung mit einem solchen Faltenbalg
Soufflet et dispositif de ceinture de sécurité avec un tel soufflet

(30) Priority: 27.04.2001 JP 2001131839
(43) Date of publication of application: 30.10.2002
(73) Proprietor: TAKATA CORPORATION, Minato-ku, Tokyo 106-8510 (JP)
(72) Inventor: Nakano, Yoshiyuki, Takata Corporation, Minato-ku, Tokyo 106-8510 (JP); Iwai, Masahiko, Takata Corporation, Minato-ku, Tokyo 106-8510 (JP)
(74) Representative: Banzer, Hans-Jörg

(56) References cited:
- EP-A- 1 266 808
- DE-U- 29 517 741
- GB-A- 2 261 267
- US-A- 5 725 249

## Description

### [Industrial Field of the Invention]

The present invention pertains to a technical field of a boot which is disposed between two members, movable relative to each other, such as a buckle of a seat belt device installed for a vehicle seat of a vehicle such as an automobile and a buckle supporting member fixed to a vehicle body for movably supporting the buckle when necessary and which contracts at least when subjected to pressure exceeding a predetermined value, and to a technical field of a seat belt device employing the boot.

### [Related Art]

Bellow-like boots capable of expansion and contraction have been conventionally known to be disposed between two members which are movable relative to each other in the axial direction, thereby protecting the space between the two members. Such boots are used in various fields and, for example, also used in a seat belt device installed to a seat of a vehicle such as an automobile, and are known from e.g. US-A-5,725,249.

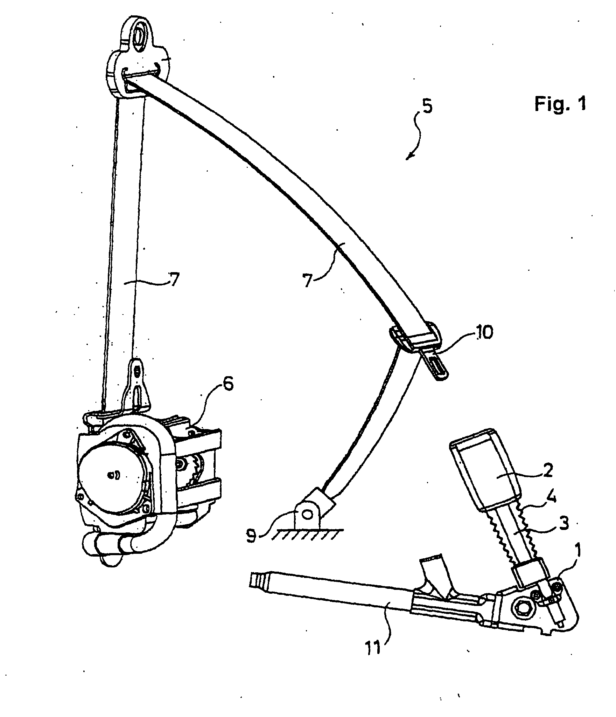

Generally, a seat belt device comprises a seat belt retractor, not shown (shown in Fig. 1 described later), which is secured to a vehicle body near a vehicle seat and normally accommodates a seat belt to allow the retraction and withdrawal of the seat belt and prevents the withdrawal of the seat belt in the event of emergency such as a vehicle collision to restrain and protect an occupant in the vehicle seat, the seat belt for restraining the occupant wearing the seat belt which extends from the seat belt retractor and the end of which is connected to an anchor fixed to a portion of the vehicle body on the outer side of the vehicle seat, a buckle fixed, for example, to a portion of the vehicle body on the inner side of the vehicle seat, and a tongue which is slidably disposed to the seat belt and can be latched to or released from the buckle. The seat belt is withdrawn to extend across the shoulder, chest, and lap of the occupant and the tongue is latched to the buckle, whereby the seat belt is worn by the occupant.

When the occupant wears the seat belt, in the normal state, the seat belt is lightly retracted by the seat belt retractor to fit the occupant's body to such an extent that the occupant does not feel pressure and in such a manner as to allow the retraction and withdrawal of the seat belt. In the event of emergency such as a vehicle collision at which large deceleration is exerted on the vehicle, the occupant tends to move forward due to a large inertia force. However, the seat belt is stopped from being withdrawn, thereby restraining and protecting the occupant.

Some conventional seat belt devices have a pretensioner which is activated in the case of emergency such as a vehicle collision to tension the seat belt, thereby improving the restraint and thus rapidly restraining the occupant with increased restraining force. The pretensioner is normally installed in the seat belt retractor, rarely installed to the buckle itself or to the anchor.

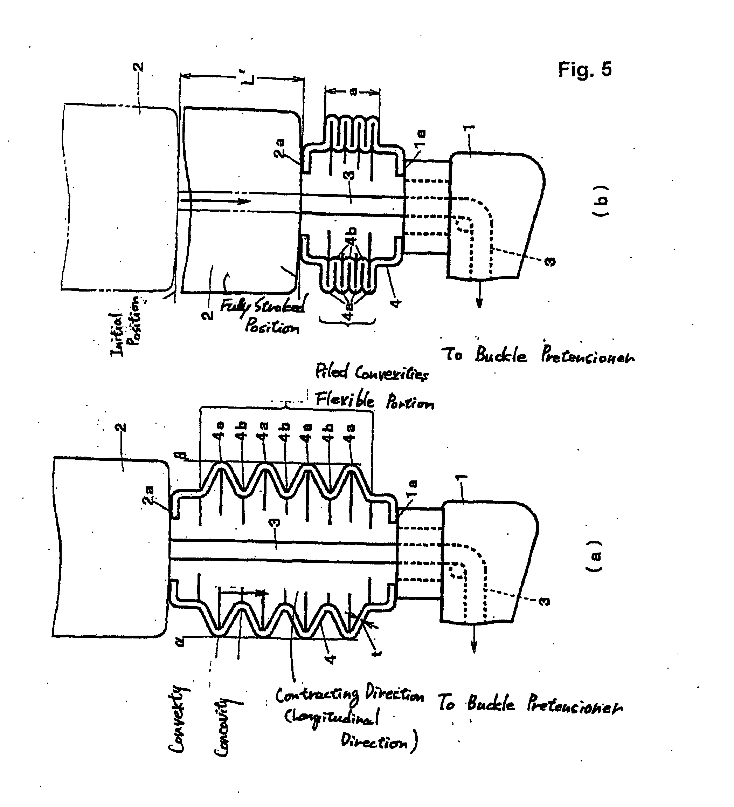

For example, in case of a pretensioner installed to the buckle, as shown in Figs. 5(a), 5(b), the buckle 2 is supported by a buckle supporting member 1 secured to a vehicle floor not shown in such a manner that the buckle 2 is movable relative to the buckle supporting member 1 in the longitudinal direction (the vertical direction in Figs. 5(a), 5(b)). The buckle supporting member 1 and the buckle 2 are the two members movable relative to each other of the present invention. One end of a wire 3 is connected to the buckle 2 and the other end of the wire 3 is connected to a piston of a buckle pretensioner not shown. Generally, the buckle pretensioner is structured to generate high-pressure reaction gas as a result of the reaction of reactant in the event of emergency such as a vehicle collision. The piston of the buckle pretensioner is actuated by the pressure of the reaction gas so as to pull the wire 3 with relatively large force.

Further, a boot 4 is arranged to cover the wire 3 between the buckle supporting member 1 and the buckle 2. The boot 4 is made of resin or rubber and formed in a cylindrical shape. In addition, the boot 4 has a bellow-like flexible portion composed of mountainous convexities and concavities of which section is triangular. In this case, sections of the flexible portion at the respective four triangular convexities (the number of concavities is three) (sections extending in direction perpendicular to the longitudinal direction of the boot 4, not shown) have same configuration and same dimension.

That is, in a vertical section shown in Fig. 5(a) passing through the center of a cross section of the boot 4, a straight line α in the longitudinal direction connecting the tops 4a of the convexities at one side (left side in Fig. 5(a)) and a straight line β in the longitudinal direction connecting the tops 4a of the convexities at the other side (right side in Fig. 5(a)) are parallel to each other. The boot 4 can freely expand and contract when it is not attached to the buckle.

In the normal state, the boot 4 is held in the expansion state as shown in Fig. 5(a). The buckle 2 is substantially fixed to the vehicle body by the wire through the boot 4. As the buckle pretensioner is actuated in the event of emergency such as a vehicle collision in the state that the seat belt is worn i.e. the tongue is latched to the buckle, the wire 3 is pulled with relatively large force as mentioned above so that the boot 4 deforms in the longitudinal direction to contract as shown in Fig. 5(b). Therefore, the buckle 2 is moved toward the vehicle body (downward in Figs. 5(a), 5(b)), thereby tensioning the seat belt extending across the occupant and thus increasing the restraint force on the occupant by the seat belt.

### [Problems to be solved by the Invention]

By the way, to improve the restraint property to the occupant by the seat belt in the event of emergency, the stroke of movement of the buckle 2 by the actuation of the buckle pretensioner is increased as longer as possible. For this, the contraction amount in the longitudinal direction of the boot 4 should be increased.

However, in the aforementioned conventional boot 4, the convexities of the boot 4 come close to each other to be piled in the contracting direction (the longitudinal direction) as shown in Fig. 5(b) so that the boot 4 can not contract further from this state. The maximum contraction amount of the boot 4 is defined by the length *a* of the bunch of the piled convexities in the longitudinal direction such that the smaller the length *a* is, the larger the maximum contraction amount is. In addition, the length *a* is defined by the thickness *t* of the boot 4.

There may be an idea that the thickness *t* of the boot 4 is reduced in order to increase the contraction amount of the boot 4. However, the reduction in thickness *t* lowers the strength of the boot 4. That is, there is a limit of reduction in thickness *t*. Accordingly, the reduction in thickness t of the boot 4 is not a way greatly increasing the contraction amount of the boot 4.

As mentioned above, the aforementioned conventional boot 4 has a problem that there is a limit to the increase in the maximum contraction amount. Accordingly, there is a limit to the increase in stroke of the buckle 2 and it is thus impossible to greatly improve the restraint property to an occupant by the buckle pretensioner.

Further, also in case of a pretensioner installed to the anchor, there is also a limit to the increase in the maximum contraction amount of the boot in the same manner as the aforementioned case of the buckle pretensioner. Accordingly, there is a limit to the amount of tensioning the seat belt and it is thus impossible to greatly improve the restraint property to an occupant by the anchor pretensioner.

A prior art boot addressing this problem is known from DE 29 517 141 U.

The present invention was made for under the aforementioned circumstances and the object of the present invention is to provide a boot of which the maximum contraction amount can be more effectively set to be larger and which has a predetermined strength.

Another object of the present invention is to provide a seat belt device which can provided improved restraint property to an occupant because the maximum contraction amount of a boot is more effectively set to be larger and in which the boot interferes with nothing.

### [Means to solve the Problems]

According to the present invention, this object is achieved by a boot as defined in claims 1 and 2, or a seat belt device as defined in claim 5. The dependent claims define advantageous and preferred embodiments of the present invention.

### [Work or Operation of the Invention]

In the boot of the present invention having the claimed structures, when at least one of two members comes closer to the other, the boot contracts in such a manner parts composing a flexible portion thereof are piled on each other in the direction perpendicular to the contracting direction. Therefore, the boot can contract largely with little depending on the piled parts of the flexible portion i.e. independently of the thickness of the boot. Accordingly, the maximum contraction amount of the boot can be larger than that of a conventional boot of which parts of the flexible portion are piled in the contracting direction.

In addition, since the boot can contract independently of the thickness t of the boot, the boot can securely have a predetermined thickness, thus providing predetermined strength.

On the other hand, according to the seat belt device of the present invention, the stroke of at least either of the buckle and the anchor-side end of the seat belt can be increased because the maximum contraction amount of the boot is increased. That is, the maximum stroke of at least one of the buckle and the end of the seat belt to be connected to the anchor can be increased.

Because of the increase in the maximum stroke of the buckle or the anchor-side end of the seat belt, the seat belt extending across the occupant can be further largely tensioned, thereby effectively increasing the restraint force to the occupant by the seat belt and thus significantly improving the restraint property by the seat belt as compared to the conventional one.

### [Brief Explanation of the drawings]

Fig. 1 is an illustration schematically showing a seat belt device employing a boot of an embodiment of the present invention.
Figs. 2(a) and 2(b) are enlarged views of a part including the boot shown in vertical section, wherein Fig. 2(a) is a view showing the normal state where the boot does not contract and Fig. 2(b) is a view showing the state where the boot contracts.
Figs. 3 (a)-3(d) are variations of the boot 4 according to the present invention.
Fig. 3(e) is an illustrative example for understanding the invention, not falling under the scope of the claims.
Figs. 4(a)-4(f) show another embodiment of a boot according to the present invention, wherein Fig. 4(a) is a front view thereof, Fig. 4(b) is a sectional view taken along a line IVB-IVB, Fig. 4(c) is a plan view thereof, Fig. 4(d) is a perspective view thereof, Fig. 4(e) is an illustration partially showing the boot in the contracted sate, and Fig. 4(f) is an illustration partially showing the boot in the contracted sate according to a variation.
Figs. 5(a) and 5(b) show a conventional boot used in a seat belt device 5, wherein Fig. 5(a) is a view showing the normal state where the boot does not contract and Fig. 5(b) is a view showing the state where the boot contracts.

### [Embodiments for carrying out the Invention]

Hereinafter, embodiments of the present invention will be described with reference to the attached drawings.

Fig. 1 is an illustration schematically showing a seat belt device employing a boot of an embodiment of the present invention. Parts of the following embodiment similar or corresponding to the parts of the conventional example will be marked by the same reference numerals and the detail description of the parts will be omitted.

As shown in Fig. 1, a seat belt device 5 of this embodiment comprises a seat belt retractor 6 which is secured to a portion of a vehicle body such as a vehicle floor, a conventionally known belt guide which is attached to a portion of the vehicle body such as a center pillar for guiding a seat belt 7 extending from the seat belt retractor 6 into a predetermined position relative to an occupant, an anchor 9 which is secured to a portion of the vehicle body such as a portion of the vehicle floor on the outer side of a vehicle seat and to which an end of the seat belt 7 is connected, a conventionally known tongue 10 which is slidably supported to the seat belt 7, a conventionally know buckle 2 which is secured to a portion of the vehicle body such as a portion of the vehicle floor on the inner side of the vehicle seat and to which the tongue 10 can be latched, a buckle supporting member 1 which supports the buckle 2 in the same manner as the conventional example, a boot 4 which is arranged between the buckle 2 and the buckle supporting member 1 in the same manner as mentioned above, and a buckle pretensioner 11 which is activated in the case of emergency such as a vehicle collision to tension the seat belt via a wire 3 in the same manner as mentioned above.

The seat belt retractor 6 may be a conventionally known emergency locking type retractor (ELR), a conventionally known ELR with a pretensioner, or a conventionally known seat belt retractor with a load limiter which is actuated in the event of emergency to limit the load on the seat belt 7 in order to absorb impact energy.

The pretensioner 11 is of a type of generating high-pressure reaction gas as a result of the reaction of reactant in the event of emergency such as a vehicle collision such that the buckle 2 is pulled toward the buckle supporting member 1 by the pressure of the reaction gas. It should be understood that the pretensioner 11 may be any of other conventionally known pretensioners.

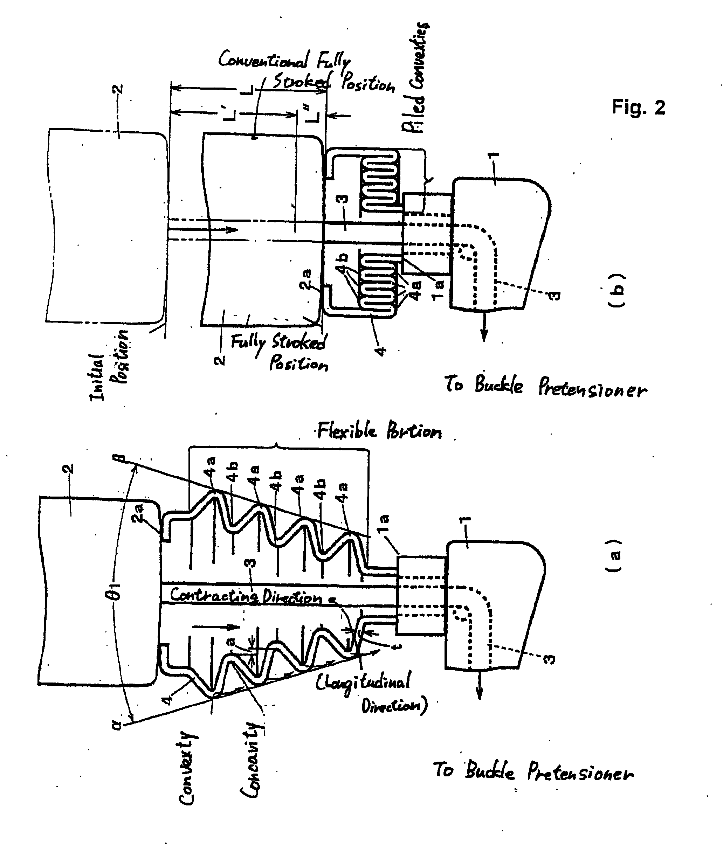

The boot 4 is made of resin such as polypropylene and polyethylene or rubber and formed in a cylindrical shape. In addition, similarly to the aforementioned conventional boot, the boot 4 has a bellow-like flexible portion composed of mountainous convexities and concavities of which section is triangular. In this case, the boot 4 is configured in such a manner that the cross sections through the tops 4a of the convexities (sections in direction perpendicular to the longitudinal direction or the contracting direction of the boot 4) are analogous and that the cross section of a convexity is smaller than that of the upper adjacent one and larger than that of the lower adjacent one by a constant ratio so that the uppermost convexity is the largest and the lowermost convexity is the smallest. That is, as shown in Fig. 2(a), the straight line α and the straight line β as mentioned above connecting the tops 4a of the convexities of the boot 4 form two sides, besides the bottom side, of an inverse isosceles triangle, respectively, so that the distance therebetween broadens toward the buckle 2 (toward the upper side in Fig. 2(a)). In this case, the inner wall of the bottom 4b of one concavity is shifted toward the center of the boot 4 from the outer wall of the bottom 4b of the next concavity (the lower next concavity) by a predetermined amount *a* (the same is true for the other concavities).

In the normal state, the boot 4 is held in the expansion state as shown in Fig. 2(a) similarly to the aforementioned conventional example. The buckle 2 is substantially fixed to the vehicle body by the wire 3 through the boot 4. As the buckle pretensioner 11 is actuated in the event of emergency such as a vehicle collision in the state that the seat belt is worn i.e. the tongue 10 is latched to the buckle 2, the wire 3 is pulled with relatively large force as mentioned above so that the boot 4 deforms in the longitudinal direction to contract.

At this point, since the flexible portion of the boot 4 has such a profile that the width broadens toward the buckle 2 i.e. the upper side, the force pressing the boot 4 downward in Fig. 2(a) by the buckle 2 produces moments which act on the respective convexities in arrow directions or outward directions of the boot 4. The moments deform the convexities of the flexible portion to bend sequentially, with the result that the convexities are piled on each other in the lateral direction (the right and left direction in Fig. 2(b)) perpendicular to the contracting direction (the longitudinal direction) as shown in Fig. 2(b). In this case, the outer wall of the bottom 4b of the concavity is shifted toward the inside of the boot 4 from the inner wall of the bottom 4b of the upper next concavity by the predetermined value a as shown in Fig. 2(a), thereby facilitating the deformation of the boot 4 to bend and thus achieving the smooth contraction of the boot 4.

That is, since the convexities are piled on each other in the lateral direction perpendicular to the contracting direction, the boot 4 can greatly contract in the longitudinal direction with little depending on the piled height of the convexities of the boot 4 (i.e. the thickness *t* of the boot 4), whereby the maximum contraction amount of the boot 4 is increased as compared to the aforementioned conventional example. Accordingly, the maximum stroke L of the buckle 2 becomes longer than the maximum stroke L' of the conventional buckle 2 by an amount L".

In addition, since the boot 4 contracts independently of the thickness *t* of the boot 4, the boot 4 can securely have a predetermined thickness, thus providing predetermined strength.

Therefore, when the boot 4 is adopted to the buckle 3, the boot 4 enables the smooth stroke of the buckle 2 and increases the maximum stroke L of the buckle 2, whereby the seat belt 7 extending across the occupant can be greatly tensioned, thereby effectively increasing the restraint force on the occupant by the seat belt 7, and thus significantly improving the restraint property by the seat belt 7 as compared to the conventional example.

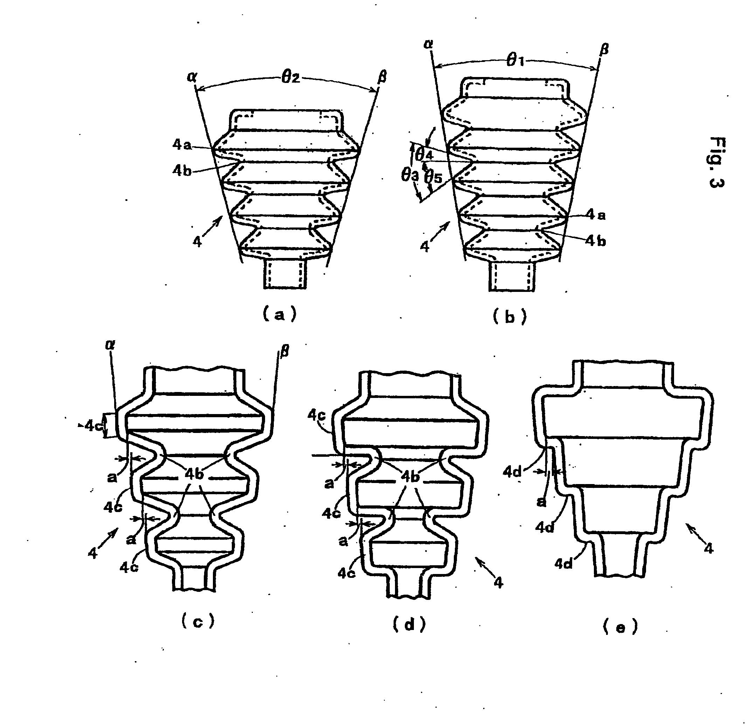

Figs. 3(a)-3(d) are variations of the boot 4 according to the present invention.

In a variation shown in Fig. 3(a), the angle θ₂ defined by the two straight lines α, β is set to be greater than the angle θ₁ defined by the two straight lines α, β of the aforementioned embodiment. Since the angle θ₂ defined by the straight lines α, β is set to be great (θ₂ > θ₁), the convexities of the flexible portion become easier to be deformed and soft and smooth contraction can be obtained. To the contrary, the angle defined by the two straight lines α, β can be set to be smaller than the angle θ₁ defined by the two straight lines α, β of the aforementioned embodiment, but this variation is not illustrated. In this case, the convexities of the flexible portion becomes harder to be deformed and hard contraction can be obtained.

By suitably setting the angle defined by the straight lines α, β, any desired contraction characteristic can be obtained. The boot 4 has advantages in adoption to the buckle 2 that the boot 4 can flexibly fit to the sizes of various buckles 2 and can provide various restraint property.

In a variation shown in Fig. 3(b), the number of convexities of the flexible portion is five that is larger than the number of the convexities of the aforementioned embodiment. Increase in the number of the convexities increases the contraction amount of the boot 4, thus increasing the stroke of the buckle 2. Therefore, the restraint property by the seat belt 7 is further improved. To the contrary, the number of convexities of the flexible portion can be set to be smaller than the number of the convexities of the aforementioned embodiment, but this variation is not illustrated. In this case, the contraction amount of the flexible portion is reduced.

By suitably setting the number of the convexities, the contraction characteristic offering any desired contraction amount can be obtained. The boot 4 has advantages in adoption to the buckle 2 that the boot 4 can flexibly fit to various distances between the buckles 2 and the buckle supporting member 1 and can provide restraint properties with various restraint forces.

Further, in a variation shown in Fig. 3(c), one convexity has flat portions 4c which are formed by cutting the top 4a of the convexity along straight lines α, β. The presence of the flat portions 4c improves the strength of the boot 4. When the boot 4 is adopted to the buckle 2, the buckle 2 can be more firmly supported by the buckle supporting member 1. In addition, the convexity (the lower next convexity) next to the above convexity also has flat portions 4c which are formed by cutting the top 4a thereof along straight lines, which are parallel to the straight lines α, β, respectively.

In this case, the flat portion 4c is shifted from the upper next flat portion 4c in such a manner that the outermost portion of the outer wall of the flat portion 4c is shifted toward the center of the boot 4 from the innermost portion of the inner wall of the upper next flat portion 4c by a predetermined value *a* (the same is true for the other). It should be noted that the outermost portion means a portion furthermost from the center of the boot 4 and that the innermost portion means a portion closest to the center of the boot 4. That is, the outer walls of the flat portions 4c are shifted inwardly (toward the center) of the boot 4 from the inner walls of the upper next flat portions 4c so that the flat portions 4c closest to the buckle supporting member 1 are closest to the center of the boot 4.

This arrangement that the flat portions 4c are sequentially shifted inwardly by the predetermined value *a* improves the strength of the boot 4, and yet facilitates the deformation of the boot 4 to bend, thus achieving the smooth contraction of the boot 4. When the boot 4 is adopted to the buckle 2, the buckle 2 is allowed to more smoothly stroke, thereby improving the restraint property by the seat belt 7. The other works and effects in case that the boot 4 of this variation is applied to the buckle 2 similarly to the aforementioned embodiment and the variations are the same as those of the aforementioned embodiment and the variations.

In the aforementioned embodiment and variations, the angle θ₃ of each concave of the flexible portion is set such that the upper wall (in the drawings) of the concave is inclined upwardly by an angle θ₄ relative to the bottom 4b and the lower wall (in the drawings) of the concave is inclined downwardly by an angle θ₅ relative to the bottom 4b as shown in Fig. 3(b). However, in a variation shown in Fig. 3(d), the upper wall of each concave extends horizontally relative to the bottom 4b (that is, θ₄ = 0). It should be noted that the lower wall of each concave may extend horizontally relative to the bottom 4b (that is, θ₅ = 0).

This arrangement further facilitates the deformation of the boot 4 to bend, thereby improving the contraction property of the boot 4 as compared to the variation shown in Fig. 3(c). The other works and effects in case that the boot 4 of this variation is adopted to the buckle 2 similarly to the aforementioned embodiment and the variations are the same as those of the variation of Fig. 3(d).

In any one of the aforementioned embodiment and variations, the flexible portion is composed of the convexities and concavities. However, in a variation not falling under the scope of the claims but useful for understanding the invention and shown in Fig. 3(e), the flexible portion is not composed of a predetermined number of steps 4d, not convexities and concavities. In this case, the steps 4d are structured so as to be dented inwardly of the boot 4 as the position becomes closer to the buckle supporting member 1. The other works and effects of the boot 4 of this variation and the other works and effects in case that the boot 4 of this variation is adopted to the buckle 2 similarly to the aforementioned embodiment and the variations are substantially the same as those of the variation of Fig. 3(d).

In any of the aforementioned embodiment and variations, the cross section of the cylindrical boot 4 is not illustrated and may be any desired shape, for example, circular, elliptical, oval-shaped, triangular, rectangular, pentagonal or polygonal.

In addition, the vertical section of the flexible portion of the boot 4 may have such a shape that the straight line α and the straight line β form two sides, besides the bottom side, of an orthodox isosceles triangle, respectively, so that the distance therebetween reduces toward the buckle 2.

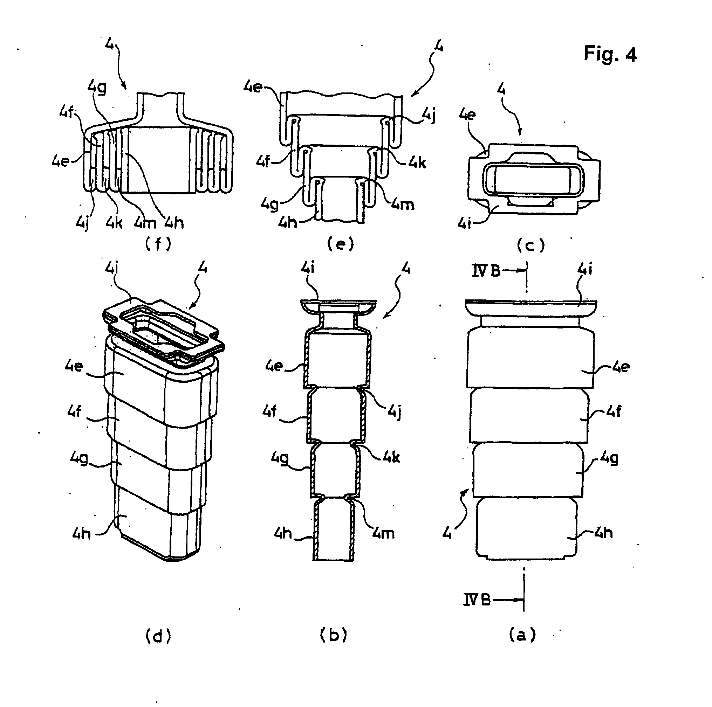

Figs. 4(a)-4(f) show another embodiment of a boot according to the present invention, wherein Fig. 4(a) is a front view thereof, Fig. 4(b) is a sectional view taken along a line IVB-IVB, Fig. 4(c) is a plan view thereof, and Fig. 4(d) is a perspective view thereof. Parts of the following embodiment similar or corresponding to the parts of the conventional example will be marked by the same reference numerals and the detail description of the parts will be omitted.

In any of the aforementioned embodiment and variations, the outer surface of the boot 4 is inclined relative to the longitudinal direction of the boot 4, for example, extending along the straight lines α, β. However, in this embodiment, the outer surface of the boot 4 extends parallel to the longitudinal direction. The boot 4 of this embodiment has a flexible portion composed of four contraction pieces 4e, 4f, 4g, 4h. The shapes of the contraction pieces 4e, 4f, 4g, 4h are analogous. The contraction pieces 4e, 4f, 4g, 4h are rectangle in their cross sections having chamfered corners. In this case, the contraction piece 4e at the uppermost position in the drawings has the largest cross section. The contraction pieces 4f, 4g, 4h are structured such that the closer to the buckle supporting member 1 the contraction piece is, the smaller the cross section is. The contraction pieces 4f, 4g, 4h are allowed to enter into the upper next contraction pieces 4e, 4f, 4g, respectively. The uppermost contraction piece 4e can be connected to the buckle 2 via a buckle joint 4i formed on its upper end. The lower end of the lowermost contraction piece 4h can be connected to the buckle supporting member 1.

The lower peripheral edge of the uppermost contraction piece 4e and the upper peripheral edge of the next contraction piece 4f are connected to each other by a ring-like joint piece 4j. The lower peripheral edge of the contraction piece 4f and the upper peripheral edge of the next contraction piece 4g are connected to each other by a ring-like joint piece 4k. Further, the lower peripheral edge of the contraction piece 4g and the upper peripheral edge of the next contraction piece 4h are connected to each other by a ring-like joint piece 4m.

Also in the boot 4 of this embodiment, the contraction pieces 4e, 4f, 4g, 4h, the buckle joint 4i, and the joint pieces 4j, 4k, 4m are made of resin such as polypropylene and polyethylene or rubber and formed integrally. In the normal state, the boot 4 is held in the full expansion state as shown in Fig. 4(b). Similarly to the aforementioned embodiment, the boot 4 is adopted to the buckle 2 of the seat belt device 5 in such a manner that the buckle joint 4i is connected to the buckle 2 and the lower end of the lowermost contraction piece 4h is connected to the buckle supporting member 1. It should be understood that the wire 3 connecting the buckle 2 and the buckle pretensioner 11 passes through the boot 4, but illustration is omitted.

In the boot 4 adopted to the buckle of the seat belt device 5, the buckle pretensioner 11 is actuated in the event of emergency such as a vehicle collision so that the buckle 2 is pulled toward the buckle supporting member 1 with relatively large force by the wire 3 in the same manner as mentioned above. Therefore, the boot 4 is pressed with large force by the buckle 2. Then, as shown in Fig. 4(e), the joint pieces 4j, 4k, 4m are bent inwardly so that the contraction pieces 4f, 4g, 4h partially enter into the upper next contraction pieces 4e, 4f, 4g, respectively. That is, the boot 4 of this embodiment contracts in the telescope-like manner.

Similarly to the aforementioned embodiment and variations, also in the boot 4 of this embodiment, the contraction pieces are piled on each other in the direction perpendicular to the contracting direction (the longitudinal direction of the boot 4). Therefore, the boot 4 can greatly contract in the longitudinal direction with little depending on the thickness of the boot 4, thereby effectively increasing the stroke of the buckle 2 and improving the restraint property to the occupant by the seat belt 7 in the event of emergency.

As shown in Fig. 4(f), the joint pieces 4j, 4k, 4m may be bent inwardly and broken. In this case, the contraction pieces 4f, 4g, 4h substantially entirely enter into the upper next contraction pieces 4e, 4f, 4g, respectively, thereby increasing the contraction amount of the boot 4.

The other works and effects of the boot 4 of this embodiment and the other works and effects in case that the boot 4 of this embodiment is adopted to the buckle 2 similarly to the aforementioned embodiment are substantially the same as those of the embodiment.

Though the cross sections of the contraction pieces 4e, 4f, 4g, 4h are set to be rectangular in the aforementioned embodiment, the cross sections of the contraction pieces 4e, 4f, 4g, 4h may be any desired shape, for example, circular, elliptical, oval-shaped, triangular, rectangular, pentagonal or polygonal.

The contraction pieces 4e, 4f, 4g, 4h may be structured such that the lowermost contraction piece 4h (closest to the buckle supporting member 1) has the largest cross section and that the upper (the closer to the buckle 2) the contraction piece is, the smaller the cross section is, to the contrary to the aforementioned embodiment in Figs. 4(a) and 4(b).

In any of the aforementioned embodiments and variations, the boot 4 is disposed on the buckle 2 of the seat belt device 5. However, the boot 4 of the present invention can be disposed between two members, movable relative to each other, such as an anchor for the seat belt device 5. Moreover, the boot 4 of the present invention can be adopted to any device, other than the seat belt device 5, having two members movable relative to each other.

### [Effects of the Invention]

As apparent from the above description, according to the boot of the present invention, when at least one of two members comes closer to the other, the boot contracts in such a manner parts composing a flexible portion thereof are piled on each other in the direction perpendicular to the contracting direction. Therefore, the boot can contract largely with little depending on the piled parts of the flexible portion i.e. the thickness of the boot. Accordingly, the maximum contraction amount of the boot can be larger than that of a conventional boot of which parts of the flexible portion are piled in the contracting direction.

In addition, since the boot can contract independently of the thickness t of the boot, the boot can securely have a predetermined thickness, thus providing predetermined strength.

On the other hand, according to the seat belt device of the present invention, the stroke of at least either of the buckle and the anchor-side end of the seat belt can be increased because the maximum contraction amount of the boot is increased. Because of the increase in the maximum stroke of the buckle, the seat belt extending across the occupant can be further largely tensioned, thereby effectively increasing the restraint force to the occupant by the seat belt and thus significantly improving the restraint property by the seat belt as compared to the conventional one.

## Claims

1. A boot (4) which is to be disposed between two members (1, 2), movable relative to each other and has a flexible portion which contracts when at least one of the members (1, 2) moves toward the other member (1, 2), wherein
said flexible portion is structured such that sections composing the flexible portion are piled on each other during its contraction, and the piling direction is perpendicular to the contracting direction,
**characterized in that**
said flexible portion has, in an extended state, triangular concavities and convexities or trapezoidal convexities, and **in that**
the flexible portion is structured such that the closer to the other member a respective one of said convexities is, the smaller the area of the cross-section perpendicular to the contraction direction of said respective one of said convexities is.

2. A boot (4) which is to be disposed between two members (1, 2), movable relative to each other and has a flexible portion which contracts when at least one of the members (1, 2) moves toward the other member (1, 2), wherein
said flexible portion is structured such that sections composing the flexible portion are piled on each other during its contraction, and the piling direction is perpendicular to the contracting direction,
wherein the flexible portion comprises a plurality of contraction pieces (4e, 4f, 4g, 4h) extending parallel to the contraction direction,
**characterized in that**
in its full expanded state the contraction pieces (4e, 4f, 4g, 4h) are connected by ring-like joint pieces (4j, 4k, 4m) forming concavities extending toward an inner side of said boot (4).

3. A boot (4) as claimed in claim 2, wherein the flexible portion is structured such that the closer to the other member (1, 2) the portion of the flexible portion is, the smaller the area of the cross section perpendicular to the contraction direction of the flexible portion is.

4. A boot (4) as claimed in any one of the preceding claims, wherein said flexible portion contracts in the telescope-like manner.

5. A seat belt device (5) comprising a seat belt (7), a seat belt retractor (6) for winding up the seat belt (7) allowing the retraction and withdrawal of the seat belt (7), and an anchor (9) for fixing an end of the seat belt (7), extending from said seat belt retractor (6), to a portion of the vehicle body, a tongue (10) which is slidably disposed to the seat belt (7), and a buckle (2) which is supported by a buckle supporting member (1) fixed to the vehicle body and to which said tongue (10) is latched, wherein
a boot (4) as claimed in one of claims 1 through 4 is disposed between said buckle (2) and said buckle supporting member (1) and/or between said anchor (9) and the end of said seat belt (7).

## Patentansprüche

1. Balg (4), welcher zwischen zwei Teilen (1, 2), welche relativ zueinander bewegbar sind, anzuordnen ist und welche einen flexiblen Abschnitt aufweist, welcher sich zusammenzieht, wenn sich zumindest eines der Teile (1, 2) zu dem anderen Teil (1, 2) hin bewegt,
wobei der flexible Abschnitt derart strukturiert ist, dass Sektionen, aus denen der flexible Abschnitt zusammengesetzt ist, während seiner Kontraktion aufeinander geschichtet werden, und wobei die Schichtrichtung senkrecht zu der Kontraktionsrichtung ist,
**dadurch gekennzeichnet,**
**dass** der flexible Abschnitt in einem ausgezogenen Zustand dreieckige Konkavitäten und Konvexitäten oder trapezförmige Konvexitäten aufweist, und
**dass** der flexible Abschnitt derart strukturiert ist, dass je näher das andere Teil einer entsprechenden der Konvexitäten ist, desto kleiner die Querschnittsfläche senkrecht zu der Kontraktionsrichtung der entsprechenden der Konvexitäten ist.

2. Balg (4), welcher zwischen zwei Teilen (1, 2), welche relativ zueinander bewegbar sind, anzuordnen ist und welche einen flexiblen Abschnitt aufweist, welcher sich zusammenzieht, wenn sich zumindest eines der Teile (1, 2) zu dem anderen Teil (1, 2) hin bewegt,
wobei der flexible Abschnitt derart strukturiert ist, dass Sektionen, aus denen der flexible Abschnitt zusammengesetzt ist, während seiner Kontraktion aufeinander geschichtet werden, und wobei die Schichtrichtung senkrecht zu der Kontraktionsrichtung ist,
wobei der flexible Abschnitt eine Mehrzahl von Kontraktionsstücken (4e, 4f, 4g, 4h) umfasst, welche sich parallel zu der Kontraktionsrichtung erstrecken,
**dadurch gekennzeichnet,**
**dass** die Kontraktionsstücke (4e, 4f, 4g, 4h) in ihrem vollständig ausgestreckten Zustand durch ringähnliche Verbindungsstücke (4j, 4k, 4m) verbunden sind, welche Konkavitäten ausbilden, die sich zu einer inneren Seite des Balgs (4) erstrecken.

3. Balg (4) nach Anspruch 2, wobei der flexible Abschnitt derart strukturiert ist, dass je näher der Abschnitt des flexiblen Abschnitts dem anderen Teil (1, 2) ist, desto kleiner die Querschnittsfläche des flexiblen Abschnitts senkrecht zu der Kontraktionsrichtung ist.

4. Balg (4) nach einem der vorhergehenden Ansprüche, wobei sich der flexible Abschnitt in einer teleskopartigen Weise zusammenzieht.

5. Sicherheitsgurtvorrichtung (5), umfassend einen Sicherheitsgurt (7), einen Sicherheitsgurtretraktor (6) zum Aufwickeln des Sicherheitsgurts (7), welcher das Zurückziehen und Herausziehen des Sicherheitsgurts (7) erlaubt, und eine Verankerung (9) zum Befestigen eines Endes des Sicherheitsgurts (7), welches sich von dem Sicherheitsgurtretraktor (6) erstreckt, an einem Abschnitt des Fahrzeugkörpers, eine Zunge (10), welche gleitbar an dem Sicherheitsgurt (7) angeordnet ist, und eine Schnalle (2), welche von einem Schnallenhalterungsteil (1) gehalten wird, welches an dem Fahrzeugkörper befestigt ist, und mit welcher die Zunge (10) verriegelt wird,
wobei ein Balg (4) nach einem der Ansprüche 1 bis 4 zwischen der Schnalle (2) und dem Schnallenhalterungsteil (1) und/oder zwischen der Verankerung (9) und dem Ende des Sicherheitsgurts (7) angeordnet ist.

## Revendications

1. Soufflet (4) qui est destiné à être agencé entre deux éléments (1, 2), mobiles l'un par rapport à l'autre, et comporte une section flexible qui se contracte quand au moins l'un des éléments (1, 2) se déplace dans la direction de l'autre élément (1, 2), dans lequel :
- ladite section flexible est réalisée de telle sorte que les segments composant la section flexible sont entassés l'un sur l'autre pendant sa contraction et que la direction d'entassement est perpendiculaire à la direction de contraction ;
**caractérisé en ce que** :
- ladite section flexible présente, dans une position étendue, des bombements et des creux triangulaires ou des bombements trapézoïdaux ; et **en ce que**
- la section flexible est réalisée de telle sorte que, plus l'un respectif desdits bombements est proche de l'autre élément, plus la surface de la section transversale perpendiculaire à la direction de contraction dudit respectif desdits bombements est petite.

2. Soufflet (4) qui est destiné à être agencé entre deux éléments (1, 2), mobiles l'un par rapport à l'autre, et comporte une section flexible qui se contracte quand au moins l'un des éléments (1, 2) se déplace dans la direction de l'autre élément (1, 2), dans lequel :
- ladite section flexible est réalisée de telle sorte que les segments composant la section flexible sont entassés l'un sur l'autre pendant sa contraction et que la direction d'entassement est perpendiculaire à la direction de contraction ;
- où la section flexible comprend une pluralité de pièces de contraction (4e, 4f, 4g, 4h) s'étendant parallèlement à la direction de contraction ;
**caractérisé en ce que** :
- dans sa position complètement étendue, les pièces de contraction (4e, 4f, 4g, 4h) sont reliées par des pièces de joint semblables à des bagues (4j, 4k, 4m) formant des creux s'étendant en direction d'un côté intérieur dudit soufflet (4).

3. Soufflet (4) selon la revendication 2, dans lequel la section flexible est réalisée de telle sorte que, plus le segment de la section flexible est proche de l'autre élément (1, 2), plus la surface de la section transversale perpendiculaire à la direction de contraction de la section flexible est petite.

4. Soufflet (4) selon l'une quelconque des revendications précédentes, dans lequel ladite section flexible se contracte d'une manière télescopique.

5. Dispositif de ceinture de sécurité (5) comprenant une ceinture de sécurité (7), un rétracteur de ceinture de sécurité (6) pour enrouler la ceinture de sécurité (7) permettant la rétraction et le désengagement de la ceinture de sécurité (7), et un ancrage (9) pour fixer une extrémité de la ceinture de sécurité (7), s'étendant à partir dudit rétracteur de ceinture de sécurité (6) jusqu'à une partie du châssis du véhicule, une languette (10) qui est agencée en coulissement sur la ceinture de sécurité (7), et une boucle (2) qui est soutenue par un élément de support de boucle (1) fixée sur le châssis du véhicule et sur laquelle ladite languette (10) est verrouillée, dans lequel :
- un soufflet (4) selon l'une quelconque des revendications 1 à 4 est agencé entre ladite boucle (2) et ledit élément de support de boucle (1) et/ou entre ledit ancrage (9) et l'extrémité de ladite ceinture de sécurité (7).
